(19) Europäisches Patentamt
European Patent Office
Office européen des brevets

(11) EP 0 633 897 B1

(12) # EUROPÄISCHE PATENTSCHRIFT

(45) Veröffentlichungstag und Bekanntmachung des Hinweises auf die Patenterteilung:
**06.03.1996 Patentblatt 1996/10**

(21) Anmeldenummer: **93906586.8**

(22) Anmeldetag: **23.03.1993**

(51) Int Cl.[6]: **C08F 4/602**, C08F 10/00

(86) Internationale Anmeldenummer:
**PCT/EP93/00694**

(87) Internationale Veröffentlichungsnummer:
**WO 93/20113 (14.10.1993 Gazette 1993/25)**

(54) **KATALYSATORSYSTEME ZUR POLYMERISATION VON C 2 - BIS C 10 -ALK-1-ENEN**
CATALYST SYSTEMS FOR POLYMERISING C 2- TO C 10- ALK-1-ENES
SYSTEMES CATALYSEURS POUR LA POLYMERISATION D'ALCENES-1 EN C 2- A C 10-

(84) Benannte Vertragsstaaten:
**BE DE ES FR GB NL**

(30) Priorität: **03.04.1992 DE 4211086**

(43) Veröffentlichungstag der Anmeldung:
**18.01.1995 Patentblatt 1995/03**

(73) Patentinhaber: **BASF Aktiengesellschaft**
**D-67063 Ludwigshafen (DE)**

(72) Erfinder:
- **EVERTZ, Kaspar**
**D-6707 Schifferstadt (DE)**
- **SCHLUND, Rueger**
**D-6800 Mannheim 1 (DE)**
- **SCHWEIER, Guenther**
**D-6701 Friedelsheim (DE)**
- **BRINTZINGER, Hans**
**CH-8274 Taegerwilen (CH)**
- **ROELL, Werner**
**D-7750 Konstanz (DE)**
- **JUTZI, Peter**
**D-4800 Bielefeld 1 (DE)**
- **MIELING, Ingrid**
**D-4434 Ochtrup (DE)**
- **MENGELE, Winfried**
**D-7750 Konstanz (DE)**

(56) Entgegenhaltungen:
- **Chemische Berichte, Band 125, Nr. 1, January 1992, U. SIEMELING et al.: "Trinuclear homo- and heterometallic complexes of a doubly bridged cyclopentadienyl ligand", Seiten 31-35.**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 633 897 B1

Printed by Jouve, 75001 PARIS (FR)

## Beschreibung

Die vorliegende Erfindung betrifft Katalysatorsysteme zur Polymerisation von $C_2$- bis $C_{10}$-Alk-1-enen, enthaltend als aktive Bestandteile

a) einen Metallocenkomplex der allgemeinen Formel I

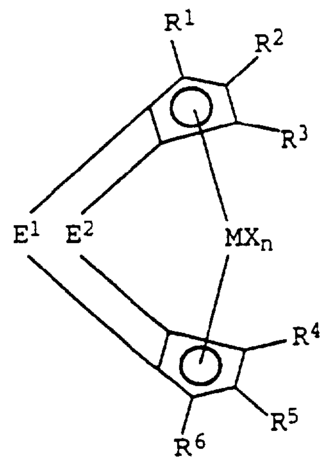

I

in der die Substituenten und Indices folgende Bedeutung haben:

| | |
|---|---|
| M | ein Metall der III., IV. oder V. Nebengruppe des Periodensystems oder ein Metall aus der Gruppe der Lanthaniden |
| X | Fluor, Chlor, Brom, Iod, Wasserstoff, $C_1$- bis $C_{10}$-Alkyl, $C_6$- bis $C_{15}$-Aryl oder $-OR^7$, wobei |
| $R^7$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |
| n | die Wertigkeit von M abzüglich der Zahl zwei |
| $R^1$ bis $R^6$ | Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^8)_3$ mit |
| $R^8$ | $C_1$- bis $C_{10}$-Alkyl, $C_6$- bis $C_{15}$-Aryl oder $C_3$- bis $C_{10}$-Cycloalkyl, |
| $E^1$, $E^2$ | unabhängig voneinander $Si(R^9)_2$, $Ge(R^9)2$, $Sn(R^9)_2$ oder $C(R^9)_2$-$C(R^9)_2$, mit |
| $R^9$ | $C_1$- bis $C_{10}$-Alkyl, $C_3$- bis $C_{10}$-Cycloalkyl oder $C_6$- bis $C_{15}$-Aryl |

sowie

b) eine offenkettige oder cyclische Alumoxanverbindung der allgemeinen Formel II oder III

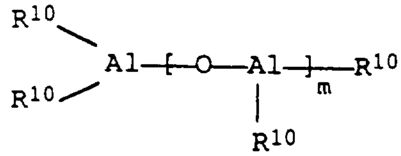

II

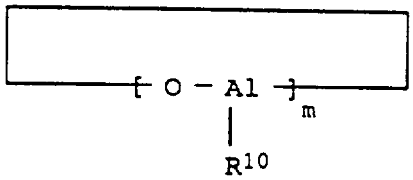

III

wobei

$R^{10}$ eine $C_1$- bis $C_4$-Alkylgruppe bedeutet und m für eine ganze Zahl von 5 bis 30 steht.

Weiterhin betrifft die Erfindung Verfahren zur Herstellung von Metallocenkomplexen der allgemeinen Formel I, die Verwendung der Katalysatorsysteme zur Herstellung von Polyalk-1-enen sowie Verfahren zur Herstellung von Polyalk-1-enen mit Hilfe dieser Katalysatorsysteme.

Einfach Dimethylsilyl-verbrückte Metallocendichloride wurden in der Patentliteratur schon breit erwähnt und stellen in Verbindung mit Alumoxanen molekular definierte Olefinpolymerisationskatalysatoren dar. Durch die Verbrückung der Cyclopentadienylliganden sind die Ligandgerüste stereorigide und bedingen hohe Stereospezifitäten bei der $\alpha$-Olefinpolymerisation, wie beispielsweise aus der EP-A 302 424 bekannt.

Gerade aber bei den technisch interessanten höheren Temperaturen kann das Ligandgerüst an Stereorigidität verlieren, so daß die Stereospezifität sinkt.

Der vorliegenden Erfindung lag daher die Aufgabe zugrunde, Katalysatorsysteme zur Verfügung zu stellen, die eine hohe Stereorigidität besitzen, und die in Verbindung mit Alumoxanen die für Metallocenkatalysatoren typischen hohen Produktivitäten aufweisen.

Demgemäß wurden die eingangs definierten Katalysatorsysteme zur Herstellung von Polyalk-1-enen gefunden. Außerdem wurden Verfahren zur Herstellung von Metallocenkomplexen der allgemeinen Formel I gefunden, die Verwendung der Katalysatorsysteme zur Herstellung von Polyalk-1-enen sowie Verfahren zur Herstellung von Polyalk-1-enen mit Hilfe dieser Katalysatorsysteme.

Die erfindungsgemäßen Katalysatorsysteme enthalten als aktive Bestandteile u.a. eine oder mehrere Komplexverbindungen der allgemeinen Formel I

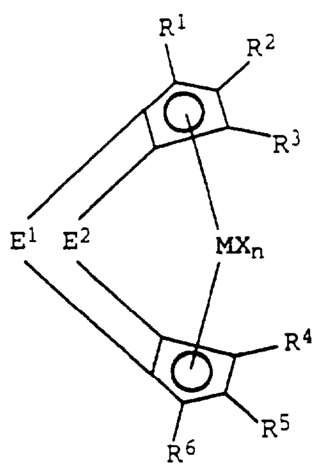

I

M steht für ein Metall der III., IV. oder V. Nebengruppe des Periodensystems oder ein Metall aus der Gruppe der Lanthaniden, bevorzugt für ein Metall der IV. oder V. Nebengruppe, insbesondere für Titan, Zirkonium oder Hafnium. X bedeutet ein Halogenatom, bevorzugt Chlor, Wasserstoff, $C_1$- bis $C_{10}$-Alkyl, bevorzugt lineare Alkylgruppen mit 1 bis 4 C-Atomen, insbesondere Methyl- oder Ethylgruppen, $C_6$- bis $C_{15}$-Aryl, bevorzugt Phenyl oder die Gruppierung $-OR^7$, wobei $R^7$ $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet.

Die Reste $R^1$ bis $R^6$ stehen unabhängig voneinander für vorzugsweise Wasserstoff, $C_1$- bis $C_{10}$-Alkyl, bevorzugt $C_1$- bis $C_4$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl, bevorzugt Phenyl, oder Arylalkyl. Es können auch zwei benachbarte Reste, also $R^1$ und $R^2$ oder $R^2$ und $R^3$ sowie $R^4$ und $R^5$ oder $R^5$ und $R^6$ gemeinsam für 4 bis 15 C-Atome aufweisende cyclische Gruppen stehen, die auch aromatischen Charakter aufweisen können; bevorzugt ist hierbei, daß zwei benachbarte Reste einen Sechsring bilden, insbesondere so, daß ein Indenyl- oder Tetrahydroindenylrest entsteht. Weiterhin können die Reste $R^1$ bis $R^6$ noch Si $(R^8)_3$ bedeuten, wobei $R^8$ für $C_1$- bis $C_{10}$-Alkyl, $C_6$- bis $C_{15}$-Aryl oder $C_3$- bis $C_{10}$-Cycloalkyl steht. Besonders geeignete

Verbindungen der allgemeinen Formel I sind solche, bei denen die Reste $R^1$ bis $R^6$ so gewählt sind, daß symmetrische Verbindungen entstehen, d.h. beispielsweise, daß die Reste $R^1$ und $R^4$ gleich sind, ebenso wie $R^2$ und $R^5$ sowie $R^3$ und $R^6$.

Die Substituenten $E^1$ und $E^2$ können gleich oder verschieden sein und stehen für die Gruppierungen $Si(R^9)_2$, $Ge(R^9)_2$, $Sn(R^9)_2$ oder $C(R^9)_2$-$C(R^9)_2$, wobei $Si(R^9)_2$, bevorzugt ist. Die Reste $R^9$ bedeuten $C_1$- bis $C_{10}$-Alkyl, vorzugsweise $C_1$- bis $C_4$-Alkyl, insbesondere Methyl, $C_3$- bis $C_{10}$-Cycloalkyl, vorzugsweise $C_5$- bis $C_6$-Cycloalkyl oder $C_6$- bis $C_{15}$-Aryl, vorzugsweise Phenyl.

Ein bevorzugtes Verfahren zur Herstellung von Metallocenkomplexen der allgemeinen Formel I besteht darin, daß man Verbindungen der allgemeinen Formel IV

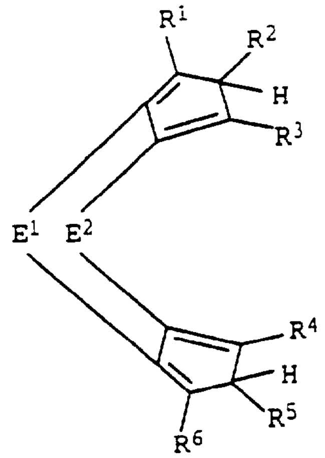

IV

mit einem Metallisierungsmittel wie Alkyllithium, vorzugsweise Butyllithium, oder Kaliumhydrid, bevorzugt in einem aliphatischen Kohlenwasserstoff als Lösungsmittel, insbesondere in Pentan oder Hexan umsetzt zu einer Verbindung mit bismetallierten Liganden. Anschließend gibt man hierzu bei Temperaturen von -50°C bis 100°C $MX_{n+2}$. Dieser Reaktionsschritt kann sowohl mit als auch ohne Lösungsmittel durchgeführt werden. Bevorzugt ist die Reaktion in einem aromatischen Kohlenwasserstoff als Lösungsmittel, insbesondere in Toluol.

Die Herstellung der Verbindungen der allgemeinen Formel IV ist dem Fachmann an sich bekannt und beispielsweise in Organometallics 1991, 10, 1787 bis 1793 beschrieben. Vorzugsweise wählt man als Ausgangsverbindung eine Lithium-Cyclopentadienyl-Verbindung

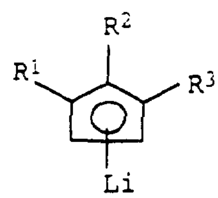

setzt diese mit dihalogeniertem $E^1$ bzw. $E^2$ um, gibt anschließend bevorzugt Butyllithium hinzu, um durch Dimerisierung Verbindungen der allgemeinen Formel IV zu erhalten. Ein Verfahren zur Herstellung von Verbindungen der allgemeinen Formel IV, bei der die Substituenten $E^1$ und $E^2$ verschieden sind, ist beispielsweise in Metallorg. Khim. 4 (1991) 2, 292 bis 298 beschrieben.

Die Metallocenkomplexe können auch in kationischer Form vorliegen, wie in der EP-A 277 003 und der EP-A 277 004 beschrieben wird.

Neben den Metallocenkomplexen enthalten die erfindungsgemäßen Katalysatorsysteme noch oligomere Aluminiumoxidverbindungen.

Geeignet sind beispielsweise offenkettige oder cyclische Alumoxanverbindung der allgemeinen Formel II oder III

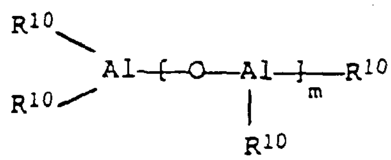

II

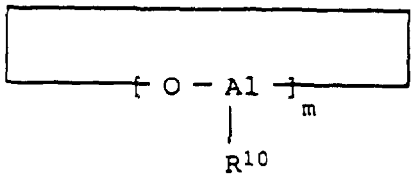

III

wobei

$R^{10}$ eine $C_1$- bis $C_4$-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linear als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, wenn das atomare Verhältnis zwischen Aluminium aus der oligomeren Aluminiumoxidverbindung und dem Metall M aus dem Metallocenkomplex im Bereich von 10:1 bis $10^6$:1, bevorzugt im Bereich von 10:1 bis $10^4$:1 liegt.

Die Bestandteile der erfindungsgemäßen Katalysatorsysteme können in beliebiger Reihenfolge einzeln oder als Gemisch in den Polymerisationsreaktor eingebracht werden.

Mit Hilfe dieser Katalysatorsysteme lassen sich Polymerisate von Alk-1-enen herstellen. Darunter werden Homo- und Copolymerisate von $C_2$- bis $C_{10}$-Alk-1-enen verstanden, wobei als Monomere vorzugsweise Ethylen, Propylen, But-1-en, Pent-1-en und Hex-1-en verwendet werden.

Die Herstellung dieser Polymerisate kann in den üblichen, für die Polymerisation von Alkenen verwendeten Reaktoren entweder diskontinuierlich oder bevorzugt kontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann.

Die Polymerisationsbedingungen sind an sich unkritisch, Drücke von 0,5 bis 3000 bar, bevorzugt 1 bis 80 bar und Temperaturen von -50 bis +300°C, bevorzugt -20 bis 100°C haben sich als geeignet erwiesen.

Polymerisationsreaktionen mit Hilfe der erfindungsgemäßen Katalysatorsysteme lassen sich in der Gasphase, in einer Suspension, in flüssigen Monomeren und in inerten Lösungsmitteln durchführen. Bei der Polymerisation in Lösungsmitteln werden insbesondere flüssige Kohlenwasserstoffe wie Benzol oder Toluol verwendet. Polymerisate mit guten anwendungstechnischen Eigenschaften sind auch bei der Polymerisation in der Gasphase, in einer Suspension und in flüssigen Monomeren erhältlich.

Die mittlere Molmasse der gebildeten Polymerisate kann mit den in der Polymerisationstechnik üblichen Methoden gesteuert werden, beispielsweise durch Zufuhr von Reglern wie Wasserstoff, oder durch Veränderung der Reaktionstemperaturen. Es können sowohl Polymerisate mit niedrigen mittleren Molmassen hergestellt werden als auch durch Senkung der Reaktionstemperatur Polymerisate mit erhöhten mittleren Molmassen.

Die erfindungsgemäßen Katalysatorsysteme weisen eine hohe Produktivität auf, die mit Hilfe der erfindungsgemäßen Katalysatorsysteme hergestellten Polymerisate zeichnen sich durch ein ausgewogenes Eigenschaftsspektrum aus.

Beispiele

Beispiel 1

Herstellung eines Zirkoniumkomplexes der Formel Ia

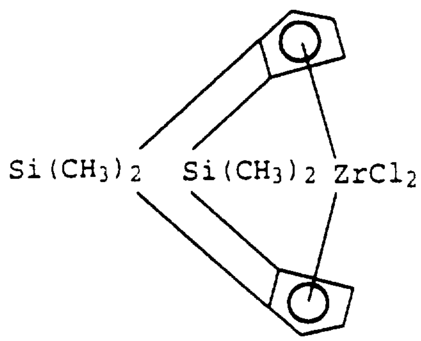

Ia

0,2 mol

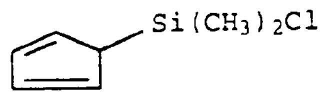

wurden bei -100°C in 1000 ml Pentan mit 0,2 mol n-Butyllithium zu einer Verbindung der Formel IVa

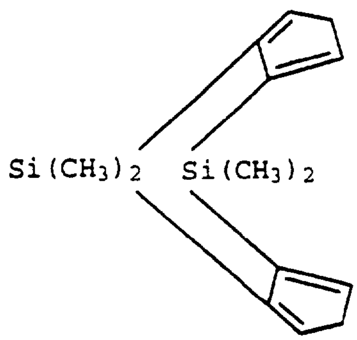

IVa

umgesetzt. 780 mg (≙ 3,20 mmol) der Verbindung IVa wurden in 40 ml Toluol gelöst und mit 4 ml einer 1,6 molaren Lösung von n-Butyllithium in Hexan (≙ 6,40 mmol) versetzt. 3,20 mmol der entstandenen Verbindung mit bismetallierten Liganden wurden bei Raumtemperatur zu einer Suspension aus 1,82 g (≙ 7,81 mmol) $ZrCl_4$ in 100 ml Toluol getropft, wobei eine Gelbfärbung zu beobachten war.

Anschließend wurde 1 Stunde auf 80°C erwärmt, wobei ein Farbumschlag nach hellbraun eintrat. Nach 6 Stunden ließ man auf Raumtemperatur abkühlen, filtrierte vom Ungelösten, wusch den festen Rückstand mit Toluol (2 x 20 ml) und entfernte das Solvens vollständig im Hochvakuum. Der Rückstand wurde mit 200 ml Hexan extrahiert, die entstandene gelbe Suspension zur Hälfte eingeengt und auf -30°C gekühlt. Man isolierte ein farbloses Pulver.

Ausbeute: 544 mg (42 %)
Schmelzpunkt: 159°C (Zersetzung)
An der Luft fand langsame Zersetzung statt.

Analysendaten zur Verbindung Ia:

$^1$H-NMR ($CDCl_3$): δ = 0,54, 0,92 (2s, 2x12H, 2xCH3), 6,45 (t, $^3$J = 2,35 Hz, 4H, H-5, H-11, H-5', H-11'), 6,94 (d, $^3$J = 2,35 Hz, 8H, H-4, H-6, H-10, H-12, H-4', H-6', H-10', H-12').
$^{13}$C{$^1$H}-HMR ($CDCl_3$): δ = -4,46, 2,27 (2xCH3), 114,88 (C-5, C-11, C-5', C-11'), 116.01 (C-4, C-6, C-10, C-12, C-4', C-6', C-10', C-12'), 139,80 (C-1, C-3, C-7, C-9, C-1', C-3', C-7', C-9').
$^{29}$Si-NMR ($CDCl_3$): δ = -17,10.

| | | | |
|---|---|---|---|
| $C_{14}H_{16}Cl_2Si_2Zr_1$ (404,3) | Ber. | C 41,55 | H 4,45 |
| | Gef. | C 40,74 | H 4,59 |

Beispiele 2 bis 8

Herstellung von Polyethylen (PE) mit Ia

In einem 1 1 Glasautoklav wurden 450 ml Toluol vorgelegt, auf verschiedene Temperaturen erwärmt und mit 8,6 ml (≙ 13,8 mmol) Methylalumoxanlösung (MAO) (1,6 molar in Toluol) versetzt. Anschließend wurden verschiedene Mengen einer toluolischen Lösung von Ia (0,0013 molar) zugegeben. Dann wurde Ethylen mit verschiedenen Drücken aufgepreßt. Nach verschiedenen Polymerisationszeiten wurde entspannt, das gebildete PE durch Austragen des Toluols mit Wasserdampf vom anhaftenden Lösungsmittel befreit und getrocknet.

In den Beispielen 2 bis 5 blieb die Rührerdrehzahl im Autoklav bei 250 U/min, in den Beispielen 6 bis 8 wurde sie von 250 U/min auf 350 U/min erhöht.

Die Versuchsbedingungen sowie die Eigenschaften der entstandenen Polymerisate sind in der Tabelle 1 zusammengestellt.

Die Bestimmung des Gewichtsmittelwertes $\overline{M}_w$ und des Zahlenmittelwertes $\overline{M}_n$ erfolgten durch Gelpermeationschromatographie.

Tabelle 1

| Beispiel | MAO | | Ia | | atomares Verhältnis zwischen Al aus MAO und Zr aus Ia | Temperatur | Druck | Polymerisations-zeit |
|---|---|---|---|---|---|---|---|---|
| | [ml] | [mmol] | [mg] | [mmol] | | [°C] | [bar] | [Minuten] |
| 2 | 8,6 | 13,8 | 1,12 | $1,38 \cdot 10^{-3}$ | 10 000:1 | 110 | 6 | 60 |
| 3 | 8,6 | 13,8 | 1,12 | $1,38 \cdot 10^{-3}$ | 10 000:1 | 80 | 6 | 30 |
| 4 | 8,6 | 13,8 | 1,12 | $1,38 \cdot 10^{-3}$ | 10 000:1 | 50 | 6 | 60 |
| 5 | 8,6 | 13,8 | 1,12 | $1,38 \cdot 10^{-3}$ | 10 000:1 | 110 | 10 | 60 |
| 6 | 8,6 | 13,8 | 1,12 | $1,38 \cdot 10^{-3}$ | 10 000:1 | 80 | 6 | 30 |
| 7 | 8,6 | 13,8 | 1,12 | $1,38 \cdot 10^{-3}$ | 10 000:1 | 80 | 6 | 60 |
| 8 | 8,6 | 13,8 | 1,12 | $1,38 \cdot 10^{-3}$ | 10 000:1 | 80 | 10 | 60 |

Tabelle 1 (Fortsetzung)

| Ausbeute | | | $\overline{M}_w$ | $\overline{M}_n$ | $\overline{M}_w/\overline{M}_n$ |
|---|---|---|---|---|---|
| [g PE] | [g PE/h·g Ia] | [g PE/h·g Zr] | [g/mol] | [g/mol] | |
| 27,9 | $24{,}9\cdot10^3$ | $0{,}11\cdot10^6$ | 31 800 | 13 000 | 2,45 |
| 11,8 | $21{,}1\cdot10^3$ | $0{,}09\cdot10^6$ | 83 500 | 29 500 | 2,83 |
| 6,4 | $5{,}7\cdot10^3$ | $0{,}025\cdot10^6$ | - | - | - |
| 50,4 | $45{,}0\cdot10^3$ | $0{,}20\cdot10^6$ | 43 000 | 15 000 | 2,86 |
| 23,1 | $41{,}3\cdot10^3$ | $0{,}18\cdot10^6$ | 103 400 | 29 500 | 3,51 |
| 21,6 | $38{,}6\cdot10^3$ | $0{,}17\cdot10^6$ | 113 200 | 48 300 | 2,34 |
| 20,8 | $74{,}3\cdot10^3$ | $0{,}33\cdot10^6$ | 131 900 | 51 000 | 2,59 |

Beispiel 9

Herstellung von Polypropylen (PP) mit Ia

In einem 10 1 Autoklaven wurden bei Raumtemperatur im Stickstoff-Gegenstrom 20 g PP-Grieß gegeben. Hierzu wurden unter Rühren (500 U/min) 9,4 ml (≙ 14 mmol) Methylalumoxanlösung (MAO) (1,53 molar in Toluol) im Stickstoff-Gegenstrom zugegeben. Anschließend wurde eine Lösung aus 7,1 mg (≙ 0,017 mmol) Ia, die mit 400 Moläquivalenten (bezogen auf Zr) Methylalumoxanlösung (1,5 molar in Toluol) unter Rühren 15 Minuten bei Raumtemperatur voraktiviert wurde, ebenfalls im Stickstoff-Gegenstrom zugegeben. Nach der Einkondensation von 7 l flüssigem Propylen wurde 5 Minuten bei Raumtemperatur gerührt, dann die Temperatur auf 50°C erhöht, was einen Druckanstieg auf ca. 20 bar zur Folge hatte und diese Polymerisationsbedingungen über 90 Minuten konstant gehalten. Man erhielt klebriges Polypropylen.

| MAO | | Ia | | atomares Verhältnis zwischen Al aus MAO und Zr aus Ia | Ausbeute | Produktivität | |
|---|---|---|---|---|---|---|---|
| [ml] | [mmol] | [mg] | [mmol] | | [g] | [g PP/g Zr] | [g PP/g Ia] |
| 9,4 | 14,04 | 7,1 | 0,017 | 1200:1 | 110 | 68 968 | 15 493 |

Beispiel 10

Herstellung eines zirkoniumkomplexes der Formel Ib

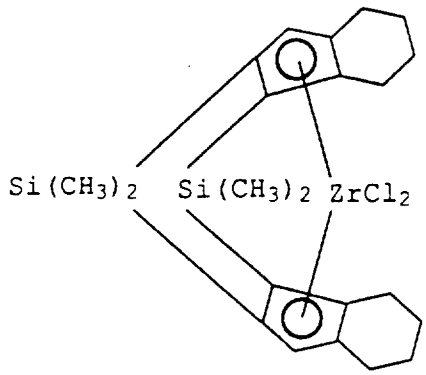

Ib

Tetrahydroinden wurde mit n-Butyllithium zu

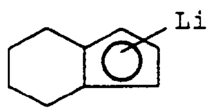

umgesetzt.

7,24 g (≙ 57,4 mmol) dieser Verbindung wurden mit 100 ml Tetrahydrofuran (THF) versetzt und dann wurden unter Eiskühlung 3,5 g (≙ 28 mmol) $Si(CH_3)_2Cl_2$ zugegeben. Die rotbraune, klare Lösung wurde 4 Stunden gerührt. Anschließend wurde mit 100 ml Diethylether versetzt und zweimal mit je 50 ml gesättigter wäßriger $NH_4Cl$-Lösung ausgeschüttelt. Die organische Phase wurde mit 50 ml Wasser gewaschen, mit $MgSO_4$ getrocknet und anschließend im Vakuum vollständig vom Lösungsmittel befreit.

Man erhielt so 8 g der Verbindung

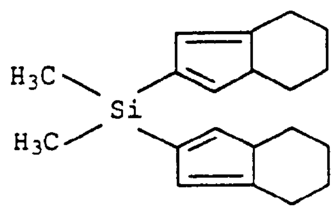

als zähes Öl (Molekularionenpeak bei m/e 296). Dieses wurde in 100 ml Pentan gelöst, auf 0°C abgekühlt und durch Zugabe von 34,2 ml (≙ 55 mmol) 1,6 molarer Butyllithium-Lösung in Hexan in das Dilithiumsalz übergeführt. Dieses wurde abfiltriert, zweimal mit je 10 ml Pentan gewaschen und am Hochvakuum getrocknet.

Das so erhaltene Dilithiumsalz (8,0 g, 26 mmol) wurde in 50 ml THF suspendiert und unter Eiskühlung mit 3,3 g (≙ 26 mmol) $(CH_3)_2SiCl_2$ versetzt. Es wurde 4 Stunden gerührt und danach das Lösungsmittel im Vakuum vollständig entfernt. Der Rückstand wurde fünfmal mit je 20 ml Pentan extrahiert. Durch Eindampfen des Extrakts erhielt man 8,4 g einer Verbindung der Formel IVb

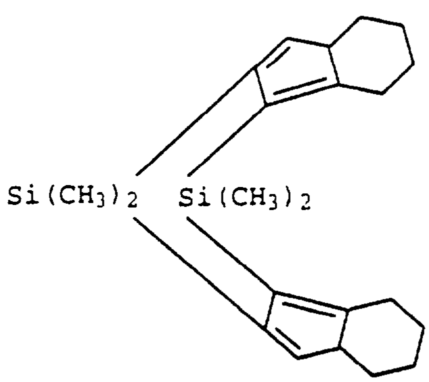

IVb

als weiße, gummiartige Masse (Molekularionenpeak bei m/e 352).

Diese wurde in 50 ml Pentan suspendiert und unter Eiskühlung mit 30 ml (≙ 48 mmol) 1,6 molarer n-Butyllithium-Lösung in Hexan versetzt und anschließend 24 Stunden bei Raumtemperatur gerührt. Das ausgefallene Dilithiumsalz wurde abfiltriert, zweimal mit 10 ml Pentan gewaschen und am Hochvakuum getrocknet. 6,9 g (≙ 18,9 mmol) dieses Dilithiumsalzes wurden mit 4,8 g (≙ 20,8 mmol) festem $ZrCl_4$ vermischt; bei Raumtemperatur wurden 75 ml Toluol zugegeben. Die entstandene braune Suspension wurde 20 Stunden gerührt. Dann wurde das Lösungsmittel im Hochvakuum vollständig entfernt und der feste Rückstand mit ca. 200 ml Pentan in einer Soxhlet-Apparatur extrahiert. Der erhaltene Extrakt wurde auf ca. 40 ml eingeengt. Der hierbei anfallende, leicht grünliche Feststoff wurde abfiltriert, mit wenig Pentan gewaschen und am Hochvakuum getrocknet. Man erhielt so 2,6 g (27 % der Theorie) eines Gemisches von Ib mit anderen Komplex-Isomeren.

Der racemische Komplex Ib wurde aus diesem Isomerengemisch durch diffusionsinduzierte Kristallisation aus Toluol/Diethylether isoliert. Durch dreimalige Wiederholung dieses Reinigungsvorgangs erhielt man 0,6 g reines rac-Ib.

Analysendaten zu Ib
$^1$H-NMR ($C_6D_6$): $\delta$ = 0,32 (s, 6H), 0,60 (s, 6H) 1,29-2,96 (m, 16H), 6,52 (s, 2H)

| | | | |
|---|---|---|---|
| $C_{22}H_{30}Cl_2Si_2Zr$ (512,8) | ber.<br>gef. | C 51,50<br>C 51,04 | H 5,90<br>H 5,56 |

Beispiel 11

Herstellung von Polypropylen (PP) mit rac-Ib

In einem 1 1 Autoklaven wurden bei 50°C 350 ml Toluol vorgelegt und mit 5 ml einer 10 gew.-%igen Lösung von Methylalumoxan in Toluol (≙ 7,7 mmol) und 3,2 mg (≙ 6,25 · $10^{-6}$ mol) Ib, gelöst in 20 ml Toluol, versetzt. Man rührte 30 Minuten und preßte dann Propylen mit einem Druck von 2 bar auf. Nach 9 Stunden wurde das Reaktionsprodukt in ein Gemisch aus 1 1 Methanol und 10 ml konz. HCl gegeben, der Niederschlag abfiltriert, mit Methanol gewaschen und 2 Stunden bei 50°C getrocknet. Man erhielt 56 g kristallines PP.

Der Gewichtsmittelwert $\overline{M}_w$ betrug 14 935, der Zahlenmittelwert $\overline{M}_n$ 9371, das Verhältnis $\overline{M}_w/\overline{M}_n$ 1,6 ($\overline{M}_w$ und $\overline{M}_n$ wurden durch Gelpermeationschromatographie bestimmt).

Der Schmelzpunkt betrug 116,5°C, ermittelt durch DSC-Messungen (Differential-Scanning-Calorimetry).

Isotaktizität: 75,2 % mmmm-Pentaden,
gemessen mittels $^{13}$C-NMR.

**Patentansprüche**

**1.** Katalysatorsysteme zur Polymerisation von C2- bis $C_{10}$-Alk-1-enen, enthaltend als aktive Bestandteile

a) einen Metallocenkomplex der allgemeinen Formel I

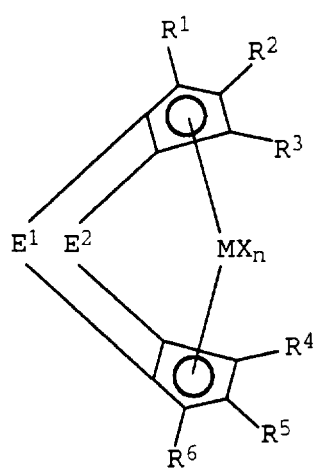

I

in der die Substituenten und Indices folgende Bedeutung haben:

| | |
|---|---|
| M | ein Metall der III., IV. oder V. Nebengruppe des Periodensystems oder ein Metall aus der Gruppe der Lanthaniden |
| X | Fluor, Chlor, Brom, Iod, Wasserstoff, $C_1$- bis $C_{10}$-Alkyl, $C_6$- bis $C_{15}$-Aryl oder $-OR^7$, wobei |
| $R^7$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |
| n | die Wertigkeit von M abzüglich der Zahl zwei |
| $R^1$ bis $R^6$ | Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^8)_3$ mit |
| $R^8$ | $C_1$- bis $C_{10}$-Alkyl, $C_6$- bis $C_{15}$-Aryl oder $C_3$- bis $C_{10}$-Cycloalkyl, |
| $E^1$, $E^2$ | unabhängig voneinander $Si(R^9)_2$, $Ge(R^9)_2$, $Sn(R^9)_2$ oder $C(R^9)_2$-$C(R^9)_2$, mit |
| $R^9$ | $C_1$- bis $C_{10}$-Alkyl, $C_3$- bis $C_{10}$-Cycloalkyl oder $C_6$- bis $C_{15}$-Aryl |

sowie

b) eine offenkettige oder cyclische Alumoxanverbindung der allgemeinen Formel II oder III

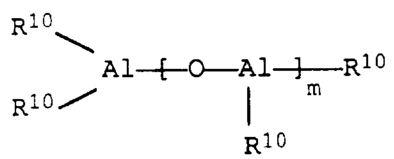

II

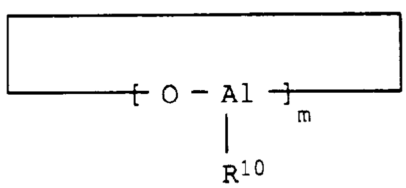

III

wobei

$R^{10}$ eine $C_1$- bis $C_4$-Alkylgruppe bedeutet und m für eine ganze Zahl von 5 bis 30 steht.

**2.** Katalysatorsysteme nach Anspruch 1, dadurch gekennzeichnet, daß M für Metalle der IV. Nebengruppe des Periodensystems steht.

**3.** Katalysatorsysteme nach den Ansprüchen 1 bis 2, dadurch gekennzeichnet, daß $E^1$ und $E^2$ für $Si(R^9)_2$ stehen.

**4.** Verfahren zur Herstellung von Metallocenkomplexen der allgemeinen Formel I gemäß den Ansprüchen 1 bis 3, dadurch gekennzeichnet, daß man Verbindungen der allgemeinen Formel IV

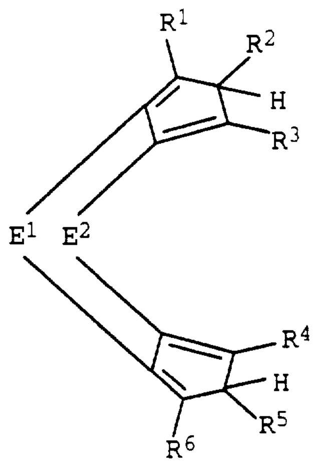

IV

mit einem Metallierungsmittel umsetzt zu einer Verbindung mit bismetallierten Liganden und anschließend hierzu bei Temperaturen von -50°C bis 100°C $MX_{n+2}$ gibt.

**5.** Verfahren zur Herstellung von Metallocenkomplexen nach Anspruch 4, dadurch gekennzeichnet, daß man als Metallisierungsmittel Alkyllithium oder Kaliumhydrid verwendet.

**6.** Verwendung der Katalysatorsysteme gemäß den Ansprüchen 1 bis 3 zur Herstellung von Polyalk-1-enen.

**7.** Verfahren zur Herstellung von Polymerisaten von $C_2$- bis $C_{10}$-Alk-1-enen bei Drücken von 0,5 bis 3000 bar und Temperaturen von -50 bis 300°C mit Hilfe eines Katalysatorsystems, dadurch gekennzeichnet, daß man Katalysatorsysteme gemäß den Ansprüchen 1 bis 3 verwendet.

## Claims

**1.** A catalyst system for the polymerization of $C_2$-$C_{10}$-alk-1-enes, containing, as active components,

a) a metallocene complex of the formula I

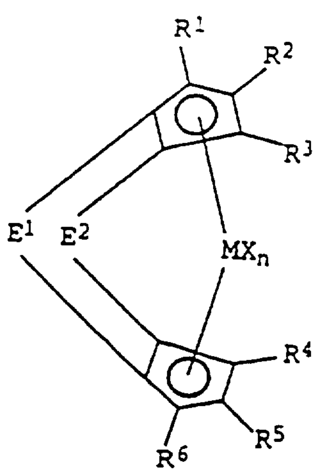

I

where

M is a metal of the subgroup III, IV or V of the Periodic Table of Elements or a metal selected from the group consisting of the lanthanides,
X is fluorine, chlorine, bromine, iodine, hydrogen, $C_1$-$C_{10}$-alkyl, $C_6$-$C_{15}$-aryl or $-OR^7$,
$R^7$ is $C_1$-$C_{10}$-alkyl, $C_6$-$C_{15}$-aryl, alkylaryl, arylalkyl, fluoroalkyl or fluoroaryl, in each case having 1 to 10 carbon atoms in the alkyl radical and 6 to 20 carbon atoms in the aryl radical,
n is the valency of M minus two,

$R^1$ to $R^6$ are each hydrogen, $C_1$-$C_{10}$-alkyl, 5-membered to 7-membered cycloalkyl which in turn may carry $C_1$-$C_{10}$-alkyl as a substituent, $C_6$-$C_{15}$-aryl or arylalkyl, where two adjacent radicals together may furthermore form a cyclic group of 4 to 15 carbon atoms, or $Si(R^8)_3$,
$R^8$ is $C_1$-$C_{10}$-alkyl, $C_6$-$C_{15}$-aryl or $C_3$-$C_{10}$-cycloalkyl,
$E^1$ and $E^2$ are independent of one another and are each $Si(R^9)_2$, $Ge(R^9)_2$, $Sn(R^9)_2$ or $C(R^9)_2$-$C(R^9)_2$ and
$R^9$ is $C_1$-$C_{10}$-alkyl, $C_3$-$C_{10}$-cycloalkyl or $C_6$-$C_{15}$-aryl,
and

b) an open-chain or cyclic alumoxane compound of the formula II or III

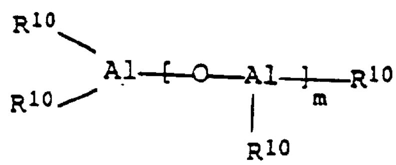

II

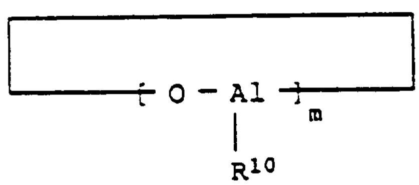

III

where $R^{10}$ is $C_1$-$C_4$-alkyl and m is an integer of from 5 to 30.

**2.** A catalyst system as claimed in claim 1, wherein M is a metal of subgroup IV of the Periodic Table of Elements.

**3.** A catalyst system as claimed in claim 1 or 2, wherein $E^1$ and $E^2$ are each $Si(R^9)_2$.

**4.** A process for the preparation of a metallocene complex of the formula I as claimed in any of claims 1 to 3, wherein a compound of the formula IV

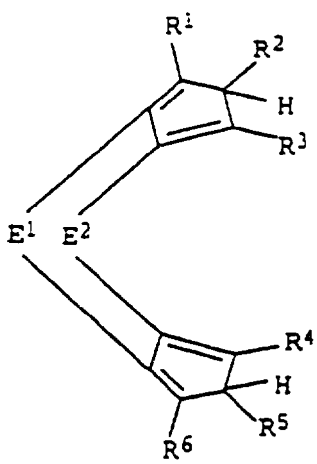

IV

is reacted with a metallizing agent to give a compound having bimetallized ligands, and $MX_{n+2}$ is then added at from -50 to 100°C.

**5.** A process for the preparation of a metallocene complex as claimed in claim 4, wherein the metallizing agent used is an alkyllithium or potassium hydride.

**6.** The use of a catalyst system as claimed in any of claims 1 to 3 for the preparation of polyalk-1-enes.

**7.** A process for the preparation of a polymer of $C_2$-$C_{10}$-alk-1-enes at from 0.5 to 3,000 bar and from -50 to 300°C with the aid of a catalyst system, wherein the catalyst system as claimed in any of claims 1 to 3 is used.

## Revendications

**1.** Systèmes catalytiques pour la polymérisation d'alcènes-1 en $C_2$-$C_{10}$, contenant, comme constituants actifs,

a) un complexe de métallocène de formule générale I

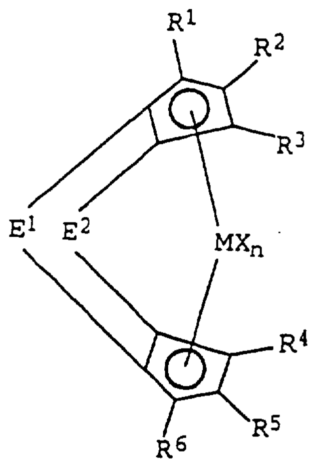

I

dans laquelle les substituants et indices ont les significations suivantes:

| | |
|---|---|
| M | métal des groupes IIIB, IVB ou VB de la classification périodique ou métal du groupe des lanthanides |
| X | atome de fluor, de chlore, de brome, d'iode, d'hydrogène, groupement alkyle en $C_1$-$C_{10}$, aryle en $C_6$-$C_{15}$ ou -$OR^7$, $R^7$ représentant un groupement alkyle en $C_1$-$C_{10}$, aryle en $C_6$-$C_{15}$, alkylaryle, arylalkyle, fluoroalkyle ou fluoroaryle contenant chacun 1 à 10 atomes de carbone dans le reste alkyle et 6 à 20 atomes de carbone dans le reste aryle, |
| n | valence de M après soustraction du nombre 2 |
| $R^1$ à $R^6$ | atomes d'hydrogène, groupements alkyle en $C_1$-$C_{10}$, cycloalkyle à 5-7 maillons qui peuvent porter de leur côté un reste alkyle en $C_1$-$C_{10}$ en tant que substituant, aryle en $C_6$-$C_{15}$ ou arylalkyle, deux restes voisins pouvant éventuellement être mis aussi en commun pour des groupements cycliques renfermant 4 à 15 atomes de carbone, ou groupements $Si(R^8)_3$, avec $R^8$ groupement alkyle en $C_1$-$C_{10}$, aryle en $C_6$-$C_{15}$ ou cycloalkyle en $C_3$-$C_{10}$, |
| E1, E2, | indépendamment l'un de l'autre, groupement $Si(R^9)_2$, $Ge(R^9)_2$, $Sn(R^9)_2$ ou $C(R^9)_2$-$C(R^9)_2$, avec $R^9$ groupement alkyle en $C_1$-$C_{10}$, cycloalkyle en $C_3$-$C_{10}$ ou aryle en $C_6$-$C_{15}$, |

ainsi que

b) un composé alumoxane en chaîne ouverte ou cyclique de formule générale II ou III

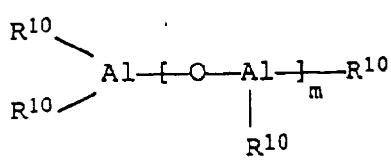

II

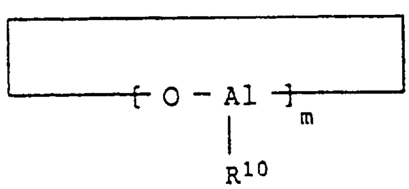

III

où $R^{10}$ représente un groupement alkyle en $C_1$-$C_4$ et m est mis pour un nombre entier de 5 à 30.

**2.** Systèmes catalytiques selon la revendication 1, caractérisés en ce que M est mis pour un métal du groupe IVB de

la classification périodique.

3. Systèmes catalytiques selon la revendication 1 ou 2, caractérisés en ce que $R^1$ et $R^2$ sont mis pour $Si(R^9)_2$.

4. Procédé de préparation de complexes de métallocène de formule générale I selon l'une quelconque des revendications 1 à 3, caractérisé en ce que l'on fait réagir des composés de formule générale IV

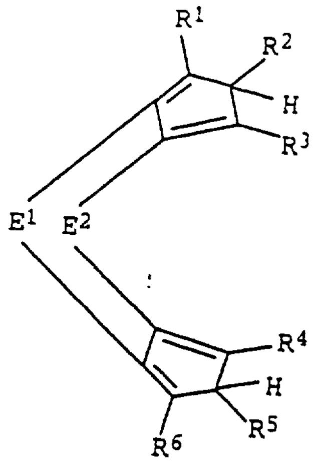

IV

avec un agent de métallation pour obtenir un composé à ligands bismétallés, et on ajoute ensuite $MX_{n+2}$ à celui-ci à une température de -50°C à 100°C.

5. Procédé de préparation de complexes de métallocène selon la revendication 4, caractérisé en ce que l'on utilise, comme agent de métallation, un alkyllithium ou de l'hydrure de potassium.

6. Utilisation des systèmes catalytiques selon l'une quelconque des revendications 1 à 3 pour la préparation de polyalcènes-1.

7. Procédé de préparation de polymères d'alcènes-1 en $C_2$-$C_{10}$ sous des pressions de 0,5 à 3000 bar et à des températures de -50 à 300°C, à l'aide d'un système catalytique, caractérisé en ce que l'on utilise des systèmes catalytiques selon l'une quelconque des revendications 1 à 3,